# EUROPÄISCHE PATENTSCHRIFT

(11) **EP 2 994 550 B1**
(45) Veröffentlichungstag und Bekanntmachung des Hinweises auf die Patenterteilung: **11.04.2018**
(21) Anmeldenummer: 14723062.7
(22) Anmeldetag: 08.05.2014
(51) Int. Cl.: C22C 9/06, C22C 9/02, C22C 9/00, C22C 1/04, C22C 1/10, C22C 26/00, C22C 32/00, C22F 1/00, B22F 1/00, B22F 7/04, B22F 9/08, F16C 33/10, F16C 33/12

(54) **KUPFERLEGIERUNG, VERWENDUNG EINER KUPFERLEGIERUNG, LAGER MIT EINER KUPFERLEGIERUNG UND VERFAHREN ZUR HERSTELLUNG EINES LAGERS AUS EINER KUPFERLEGIERUNG**
COPPER ALLOY, USE OF A COPPER ALLOY, BEARING HAVING A COPPER ALLOY, AND METHOD FOR PRODUCING A BEARING COMPOSED OF A COPPER ALLOY
ALLIAGE DE CUIVRE, UTILISATION D'UN ALLIAGE DE CUIVRE, PALIER CONTENANT UN ALLIAGE DE CUIVRE, ET PROCÉDÉ DE FABRICATION D'UN PALIER À PARTIR UN ALLIAGE DE CUIVRE

(30) Priorität: 08.05.2013 DE 102013208497
(43) Veröffentlichungstag der Anmeldung: 16.03.2016
(73) Patentinhaber: Federal-Mogul Wiesbaden GmbH, 65201 Wiesbaden (DE)
(72) Erfinder: SCHMITT, Holger, 64319 Pfungstadt (DE); MEISTER, Daniel, 55246 Mainz-Kostheim (DE); SAXTON, David M., Ann Arbor, Michigan 48108 (US)
(74) Vertreter: Hoffmann Eitle
(86) Internationale Anmeldenummer: PCT/EP2014/059441
(87) Internationale Veröffentlichungsnummer: WO 2014/180951

(56) Entgegenhaltungen:
- WO-A1-2011/154039
- DE-A1-102011 007 362
- DE-B3-102011 087 798
- JP-A- H0 499 836
- US-A- 6 165 246
- US-A1- 2012 141 057

## Beschreibung

### Technisches Gebiet

Die vorliegende Erfindung betrifft eine Kupferlegierung, die Hartpartikel und optional Festschmierstoffe aufweist, die Verwendung dieser Kupferlegierung für ein Lager, ein Lager aus der Kupferlegierung und ein Verfahren zur Herstellung dieses Lagers.

### Stand der Technik

Bleifreie Kupferlegierungen mit Eisen und Phosphor sind als leistungsfähige Werkstoffe in der Elektrotechnik bekannt.
So offenbart zum Beispiel die US 2009/0010797 A1 ein Band aus einer Kupferlegierung, die im Wesentlichen eine Legierung des Typs Cu-Fe-P mit 0,01-3,0 Gew.-% Fe und 0,01-0,3 Ges.-% P ist und ferner geringe Anteile an Zn, Sn, Mn, Mg und Ca aufweisen kann. Ziel ist es, ein Material mit hoher elektrischer Leitfähigkeit, hoher Festigkeit und guter Biegbarkeit, zum Beispiel zur Anwendung in IC Leiterplatinen vorzusehen.
Die US 2006/0091792 A1 offenbart Dünnfilme aus einer Kupferlegierung, die Fe und P aufweist und in Flachbildschirmen zur Anwendung kommt. Ferner wird ein Sputtersubstrat zur Erzeugung von entsprechenden Dünnfilmen vorgesehen.
Des Weiteren beschreibt das Werkstoffdatenblatt "CuFe2P" des Deutschen Kupferznstituts, sowie das Datenblatt zu "Wieland-K65" entsprechende Kupferlegierungen für elektronische Bauteile. Kupferlegierungen finden aber auch verbreitet Anwendung in Lagerwerkstoffen und Gleitelementen z.B. in Form von "Lagerbronzen". Die Verschleißbeständigkeit dieser Legierungen kann z.B. durch Ausscheidungshärtung in einem dazu gezielt ausgewählten Legierungssystem oder durch die Zugabe von Hartstoffen gesteigert werden.

Dazu beschreibt die DE 10 2007 049 383 A1 einen Verbundwerkstoff, insbesondere einen Reibverbundwerkstoff, der ein Trägermaterial aus einem Stahlwerkstoff und eine Auflage aus einer Kupferlegierung aufweist. Das Ziel besteht darin, einen Werkstoff vorzusehen, der in einfacher Weise zu einem Formteil umgeformt werden kann und eine abnutzungsbeständige Reibschicht aufweist. Die Verschleißbeständigkeit wird dadurch erzielt, das die Kupferlegierung der Auflage aus einer aushärtbaren Kupferlegierung z.B. CuNiSi, CuNiSiMg, Cu-Cr, Cu-Fe, Cu-(Fe, Co, Ni)-P, CuBe oder CuMg besteht. Als Trägermaterial kommen zum Beispiel C-Stahl, Warmfeststahl, Einsatzstahl oder Nitrierstahl zum Einsatz. Weiter wird ein Verfahren zur Herstellung des Verbundwerkstoffs beschrieben, bei dem die Kupferlegierung als Folie auf das Trägermaterial walzplattiert wird und verschiedene Wärmebehandlungen durchläuft. Die verschleißfeste Oberfläche wird erst nach dem Umformen des Verbundwerkstoffs zu einem Reibkörper, durch Ausscheidungshärtung erzeugt.

Die DE 10 2005 014 302 A1 beschreibt ein Verfahren zur Herstellung eines Gleitlagers sowie ein Gleitlager selbst mit dem Ziel, besonders günstige Gleitoberflächen auszubilden. Dies wird durch Ätzprozesse erreicht, bei denen selektiv, bestimmte Phasen aus dem Material der Gleitoberfläche herausgelöst werden und andere Phasen auf der Oberfläche zurück bleiben. Zu diesem Zweck werden Kupfer-Mehrstofflegierungen, die mindestens zwei verschiedene Phasenbestandteile im Gefüge aufweisen, verwendet. Die Ausbildung dieser Phasen kann über Ausscheidung erfolgen. Als Beispiele für geeignete Materialien sind Kupfer-Aluminium-Mehrstoffbronzen, die Fe, Ni, Mn, Zn und Si enthalten können, sowie CuAl13Fe4,5CoMn, CuAl15Fe4,5CoMn und CuAl10Ni5Fe4 genannt. Je nach Wahl einer Säure zum Ätzen kann bestimmt werden, ob härtere oder weichere Phasen auf der Oberfläche zurück bleiben, was eine Anpassung auf den Einsatzzweck des Gleitelements erlaubt. Die entstandene Ätzstruktur gestattet es ferner, dass sich ein verschleißminderndes Schmierstoffreservoir ausbilden kann.

Die EP 0 962 541 A1 beschreibt ein gesintertes, kupferbasierendes Gleitmaterial, das sich durch Zugabe von Hartstoffpartikeln mittlerer und hoher Härte auszeichnet. Als Grundmaterial werden reines Kupfer oder Kupferlegierungen vorgeschlagen. Als Kupferlegierungen können Cu-Ag-Basislegierungen oder Cu-Pb-Ag-Basislegierungen verwendet werden. Ferner können diese Legierungen bis zu insgesamt 50 Gew.-% der folgenden Zusätze aufweisen: Ni, Sn, P, Al, Si, Bi, Mn, Zn, Fe und Sb. Das Gleitmaterial erreicht gute Gleiteigenschaften bei gleichzeitig guter Bearbeitbarkeit durch den gezielten Zusatz von Partikeln großer Härte aus der Gruppe metallischer Oxide, Boride, Karbide und Nitride und Partikeln mittlerer Härte wie z.B. Fe₃P, Fe₂P, Fe₃B, TiSi₂, ZrSi₂ oder NiP. Die Partikel hoher Härte werden in einer Menge von 0,01 bis 15 Ges.-% und mit mittleren Partikeldurchmessern von 0,5 µm oder mehr zugesetzt. Die Partikel mittlerer Härte werden in einer Menge von 0,5 bis 20 Gew.-% und mittleren Partikeldurchmessern von 50 µm oder weniger, zugesetzt.

Das Lagermaterial selbst wird durch Vermischen eines kupferhaltigen Pulvers, das z.B. durch Verdüsen erzeugt wurde, mit den Hartstoffpartikeln, anschließendem Ausbreiten auf ein Stahlband und Sintern hergestellt.

Die WO 2008/140100 A1 offenbart ein bleifreies, kupferbasierendes Gleitmaterial, das ein Ag-Bi Eutektikum und ferner die Elemente Ni, P, Zn sowie 1 bis 10 Ges.-% Hartstoffpartikel aus der Gruppe Fe₃P, Fe₃P, FeB, NiB und AlN mit mittleren Korngrößen von 1,5 bis 70 µm aufweist.

Die DE 10 2011 007 362 betrifft eine bleifreie Kupferlegierung für Gleitlager mit Eisen und Phosphor, die Fe2P- oder Fe3P-Partikel bilden.

Aus der US 2012/141057 A1 geht ein Gleitlager mit einem Kupfermaterial hervor, das Eisen, Zink und Phosphor enthält. Schließlich betrifft die JP A 0499836 A ein Gleitlager mit einem auf einem Stahlsubstrat aufgebrachten Kupferlegierungspulver mit Grafit und Al203-Hartpartikeln.

### Darstellung der Erfindung

Eine Aufgabe der vorliegenden Erfindung liegt darin, eine verbesserte Kupferlegierung vorzusehen.
Die Lösung dieser Aufgabe wird durch die Legierung nach Anspruch 1 gegeben. Weitere bevorzugte Ausführungsformen der Erfindung ergeben sich aus den davon abhängigen Unteransprüchen.

Bei der erfindungsgemäßen Legierung handelt es sich um die Legierung nach Anspruch 1. Diese Legierungen zeigen einen vorteilhaften Kompromiss aus Härte (Zinngehalt) und Korrosionsbeständigkeit (Nickelgehalt) und sind insbesondere für leistungsfähige Pleuelbuchsen geeignet. Weniger Zinn führt zu einer zu geringen Ermüdungsfestigkeit für die Anwendung als Pleuelbuchse. Weniger Nickel hingegen erniedrigt die Korrosionsbeständigkeit der Legierung wohingegen mehr Nickel lediglich die Legierungskosten erhöht aber kaum zur weiteren Steigerung der Korrosionsbeständigkeit beiträgt. Ein übliches Verunreinigungsniveau beträgt zum Beispiel bei Einzelelementen < 0,01 Gew.-%, wobei die Summe aller Verunreinigungselemente < 0,2 Gew.-% beträgt.

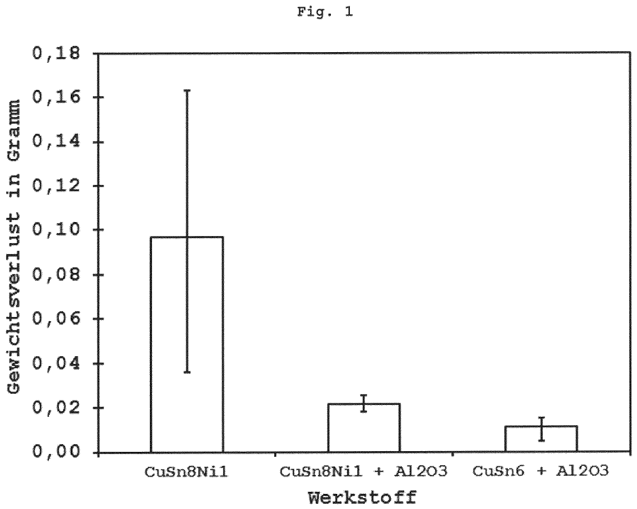

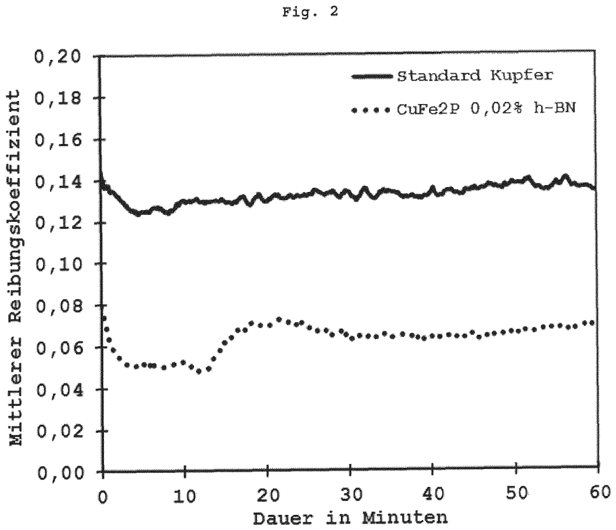

Kupferlegierungen an sich sind aufgrund ihres Gefügeaufbaus und ihrer physikalischen Eigenschaften besonders für Lageranwendungen geeignet. Die Anwesenheit von Hart(stoff)partikeln verbessert die Eigenschaften der Kupferlegierung weiter dadurch, dass die Festigkeit der Legierungsmatrix erhöht wird und die Abriebfestigkeit gesteigert wird, wie im Vergleich verschiedener Kupferlegierungen in Fig. 1 deutlich wird. Des Weiteren verbessern optional vorhandene Festschmierstoffe wie in Fig. 2 gezeigt, durch Verringerung der Reibungszustände die Gleitfähigkeit der Legierung. Insgesamt zeichnet sich die erfindungsgemäße Legierung, z.B. im Vergleich zu den gängigen bleifreien Sinterwerkstoffen CuSn8Ni1 und CuSn10Bi3,5, durch eine deutlich verbesserte Korrosionsbeständigkeit bei gleichzeitig hoher Ermüdungsfestigkeit und besseren Gleiteigenschaften aus. Die Verbesserung der Ermüdungsfestigkeit ist auch auf die höhere thermische Leitfähigkeit der beschriebenen Legierung zurückzuführen. Dadurch kann die im Anwendungsfall entstehende Wärme besser abgeführt werden und die thermische Belastung wird reduziert.

Die Feinabstimmung der Gehalte an Legierungselementen erlaubt eine gezielte Abstimmung der Legierungseigenschaften auf unterschiedliche Einsatzbedingungen der Kupferlegierung besonders im Hinblick auf Korrosionsbeständigkeit, Ermüdungsfestigkeit, Gleiteigenschaften und das Wechselspiel mit den zugesetzten Hart(stoff)partikeln und optionalen Festschmierstoffen. So verbessert zum Beispiel die Zugabe von Nickel in dem angegebenen Konzentrationsbereich die Korrosionsbeständigkeit. Dabei kann es im Werkstoff zu einer Aufkonzentration von Nickel an der Werkstoffoberfläche kommen. Die so gebildete Schicht verhindert effektiv Lochfraß bzw. Flächenkorrosion. Eisen und Phosphor bilden zusätzliche Hartpartikel, welche die Abriebfestigkeit erhöhen. Zinn erhöht die Härte der Matrix. Optionales Aluminium und Zink erhöhen, wie auch Nickel, die Korrosionsbeständigkeit.

Bevorzugt weisen die in der Kupferlegierung enthaltenen Hartpartikel Oxide, Karbide und/oder Nitride, z.B. c-BN, SiO₂, Al₂O₃, ZrO₂, SiC und/oder Si₃N₄ auf. Auch sind intrinsisch gebildete Hartpartikel z.B. Fe-P-Hartpartikel möglich. Die Hartpartikel zeichnen sich durch eine Härte aus, die größer ist als die der Legierungsmatrix und erhöhen damit den Verschleißwiderstand des Werkstoffs insgesamt. Weiter ist es vorteilhaft, Partikel hoher Härte in einer vergleichsweisen weichen Matrix, wie z.B. der erfindungsgemäßen Kupferlegierung einzubetten, da diese, die auf die Partikel wirkenden Kräfte optimal kompensieren kann und die Partikel zuverlässig einbettet.

Ferner ist es bevorzugt, dass die Hartpartikel eine Partikelgröße kleiner als 15 µm aufweisen. Der bevorzugte Größenbereich der Partikel stellt einen optimalen Kompromiss aus guter Dispersion dieser in der Legierungsmatrix und optimaler Steigerung der Abriebfestigkeit und Matrixfestigkeit dar. Die Untergrenze der Partikelgröße beträgt 100 nm. Sind die Partikel zu groß, d.h. größer als 15 µm, schädigen diese das Lager und werden aus dem Schmierspalt ausgetrieben. Sind die Partikel kleiner als 100 nm, überwiegt die Festigkeitssteigerung im Vergleich zur Abriebfestigkeit. Je nach Gewichtsanteil kann jedoch ein Poliereffekt auftreten, der den Gegenläufer schädigt. Sehr feine Partikel hingegen neigen durch starke Adhäsionskräfte zur Agglomeration. Dieser Mechanismus verstärkt sich mit abnehmender Partikelgröße. Für eine optimale Wirkung der Partikel ist allerdings eine gleichmäßige Verteilung notwendig. Dieses wird durch Mahl-und Mischprozesse erreicht. Bei einer bestimmten Untergrenze der Korngröße reichen allerdings die Mahl- und Scherkräfte nicht mehr aus, um die Additive gleichmäßig in der Legierungsmatrix zu verteilen und die Agglomeration zu verhindern.

Es ist weiter bevorzugt, dass die Kupferlegierung bis zu 10 Gew.-% Hartpartikel und/oder bis zu 10 Gew.-% Festschmierstoffe aufweist. Der Gehalt an Hartpartikeln stellt zum einen sicher, dass genügend Hartpartikel vorhanden sind, um eine messbare Verbesserung der Abrieb- und Matrixfestigkeit zu erreichen. Zum anderen wird gewährleistet, dass die vorteilhaften Eigenschaften der Legierungsmatrix nicht durch einen zu hohen Gehalt an Hartpartikeln nachteilig verändert werden. Ferner erlaubt der bevorzugte Konzentrationsbereich eine gezielte Einstellung der Werkstoffeigenschaften. Je nach den spezifischen Anforderungen in einem Anwendungsgebiet, kann ein höherer oder niedriger Gehalt an Hartpartikeln in der Kupferlegierung eingestellt werden. Als Untergrenze für den Gehalt an Hartpartikeln kann beispielsweise ein Wert von jeweils 0,01 Gew.-% bzw. in Summe von 0,2 Gew.-% angenommen werden.

Die in der Kupferlegierung optional vorhandenen Festschmierstoffe sind bevorzugt hexagonales Bornitrid (h-BN) und/oder Graphit. Der erfindungsgemäße Gehalt dieser stellt dabei sicher, dass die gewünschte Verringerung der Reibungszustände erreicht aber zum anderen eine mechanische Schwächung und Verringerung der Verschleißfestigkeit durch zu hohe Gehalte vermieden wird. Beide Werkstoffe, h-BN und Graphit, sind aufgrund ihrer atomaren Struktur hervorragende Schmierstoffe, die zur dauerhaften Schmierung in die Kupferlegierung eingebaut werden können und die Einstellung optimaler Gleiteigenschaften erlauben. Insbesondere h-BN zeichnet sich durch eine hohe Temperatur- und Oxidationsbeständigkeit aus und behält somit seine guten Schmiereigenschaften über einen weiten Temperaturbereich.

Abschließend wird bevorzugt, dass die Kupferlegierung bleifrei ist. Insbesondere für die Umweltverträglichkeit und Fragen des Recyclings ist es vorteilhaft auf umweltbelastendes Blei zu verzichten.

Eine weitere Aufgabe der Erfindung besteht darin, die in den Ansprüchen 1-6 beschriebene Kupferlegierung für ein Lager zu verwenden und ein Lager mit einer Kupferlegierung nach den Ansprüchen 1-6 vorzusehen. Diese Aufgaben werden durch die Ansprüche 7 und 8 gelöst.

Wie bereits beschrieben werden die guten intrinsischen Eigenschaften der Kupferlegierung in Bezug auf Verschleiß- und Gleiteigenschaften, durch Einbringen von Hartpartikeln und optionalen Festschmierstoffen weiter verbessert. Damit ist die erfindungsgemäße Legierung bestens für die Verwendung in Lagern, zum Beispiel in Buchsen, insbesondere in Pleuelbuchsen und in Gleitelementen geeignet. Folglich ergibt sich auch die Vorteilhaftigkeit ein Lager vorzusehen, das die beschriebene Kupferlegierung enthält. Aus den oben genannten bevorzugten Ausführungsformen der Kupferlegierung ergibt sich eine hohe Anpassbarkeit der Legierung auf unterschiedlichste Einsatzbedingungen des Lagers. Durch die Einstellung der Gehalte an Legierungselementen, Hartpartikeln und Festsschmierstoffen kann zum Beispiel ein Lager mit hoher Härte und Widerstandsfähigkeit vorgesehen werden oder aber auch ein Lager mit besonders optimierten Gleiteigenschaften.

Weiter liegt eine Aufgabe der Erfindung darin, ein Verfahren zur Herstellung eines Lagers mit einer Kupferlegierung gemäß den Ansprüchen 1 bis 6 vorzusehen. Diese Aufgabe wird durch den Gegenstand des Anspruchs 9 gelöst und weitere bevorzugte Ausführungsformen des Verfahrens ergeben sich aus den diesbezüglichen Unteransprüchen 10-13.

Das erfindungsgemäße Verfahren umfasst die Erzeugung eines metallischen Pulvers, optional das Zumischen von Hart(stoff)partikeln und optionalen Festschmierstoffen zu diesem Pulver, optional das Erzeugen intrinsischer Hartpartikel in der Kupferlegierung, optional, zwischen einem ersten Sinterschritt und einen zweiten Sinterschritt einen Infiltrationsschritt eines Legierungselements, bevorzugt Aluminium, und das Aufsintern des gemischten Pulvers auf ein Substrat.

Somit wird über einen Sinterprozess ein, mit der vorteilhaften Kupferlegierung beschichtetes Substrat gebildet, aus dem das Lager gefertigt werden kann. Über verschiedene Misch- und Mahleinheiten kann ein Pulver erzeugt werden, dass optimal auf den nachfolgenden Sinterprozess ausgerichtet ist. Ferner ist es so möglich, die Hartpartikel und optionale Festschmierstoffe gut kontrollierbar beizumischen und ihre homogene Verteilung im gemischten Pulver und später in der Kupferlegierung sicherzustellen. Alternativ ist es jedoch auch möglich, Hartpartikel intrinsisch d.h. durch metallurgische Prozesse innerhalb der Kupferlegierung zu erzeugen. Dies ist z.B. denkbar bei der Anwesenheit von Fe und P, wobei Fe-P-Hartpartikel direkt in der Kupferlegierung gebildet werden können und eine externe Zugabe von Hartpartikeln nicht unbedingt erforderlich ist aber dennoch optional erfolgen kann. Der Sinterprozess, mit der entsprechenden Erzeugung eines gemischten Pulvers, erweist sich als vorteilhaft dadurch, dass der Zusatz funktionaler Teilchen (Hartpartikel und optionale Festschmierstoffe) besonders gut kontrolliert werden kann und sich Probleme bei der Verteilung dieser im Vergleich zu einem Schmelzprozess vermeiden lassen. Weiter bedarf das erhaltene Material keiner nachgelagerten Walz- und Wärmebehandlungsschritte, was mit einer Verkürzung des Gesamtprozesses einhergeht.

Bevorzugt erfolgt die Erzeugung des metallischen Pulvers über Schmelzverdüsung. Dieser Verdüsungsprozess resultiert in einem vorlegierten Pulver, das in den nachfolgenden Schritten weiter verarbeitet werden kann. Zum Beispiel lässt sich ein CuNiFePSn-Pulver erzeugen, dass nicht zur Passivierung neigt und ohne Zusatz weiterer Sinterhilfsstoffe eingesetzt werden kann. Durch die Verdüsung kann auch ein erhöhter Feinanteil (< 5 µm) in dem metallischen Pulver erreicht und damit die Sintertemperatur vorteilhaft gesenkt werden. Ferner lässt die Verdüsung prinzipiell die Verwendung von Reinelementen zu und erlaubt damit eine Minimierung der Kosten für die Einsatzmaterialien.

Ferner ist es bevorzugt, dass Legierungselemente, z.B. optionales Aluminium, erst nach der Schmelzverdüsung zugegeben werden. Zink und Aluminium bilden hochschmelzende Oxide, welche die Sinterpulver passivieren, wenn sie bereits bei der Schmelzverdüsung mit einlegiert worden sind. Eine separate Zugabe von Elementpulvern hingegen bedeutet, dass diese sich besser einsintern lassen.

Bezüglich des optionalen Infiltrationsprozesses wird in dem ersten Sinterschritt zunächst eine poröse Matrix erzeugt, in die ein Legierungspulver eingebracht wird. Im nachfolgenden zweiten Sinterschritt fließt bzw. diffundiert das entsprechende Legierungselement in die Matrix ein. Der Vorteil dieses Infiltrationsschritts besteht darin, dass das Legierungselement dadurch sehr gleichmäßig in der Legierung verteilt wird.

Abschließend ist bevorzugt, dass das Substrat auf dem das gemischte Pulver aufgesintert wird, ein Metallband, bevorzugt ein Stahlband ist. Stahl ist ein vielfältiger und technologisch sehr gut beschriebener Werkstoff und wird verbreitet als Grundwerkstoff z.B. für Gleitelemente eingesetzt. Die beschriebene Kupferlegierung bildet eine gute Bindung zum Stahlgrundwerkstoff aus, und der durch das erfindungsgemäße Verfahren erzeugte Verbundwerkstoff, aus metallischen Substrat und Kupferlegierung, kann mit gängigen Verfahren zu einem leistungsfähigen Lager weiterverarbeitet werden.

Eine abschließende Aufgabe der Erfindung besteht darin, ein alternatives Verfahren zur Herstellung eines Lagers mit der Kupferlegierung gemäß den Ansprüchen 1 bis 7 vorzusehen. Diese Aufgabe wird durch das Verfahren in Anspruch 14 gelöst.

Demnach kann die beschriebene Kupferlegierung neben Sintern, auch aus dem schmelzflüssigen Zustand auf ein Grundmaterial aufgebracht oder als Folie auf ein Grundmaterial plattiert werden. Es ist ferner möglich, ein Lager vollständig aus der beschriebenen Kupferlegierung vorzusehen. Dazu wird diese gegossen, optional wärmebehandelt und gewalzt und dann zu dem Lager weiterverarbeitet.

Die alternativen Verfahren können, falls erforderlich, die Herstellung des Lagers über einen Sinterschritt mit der entsprechend notwendigen Erzeugung eines Pulvers vermeiden. Ferner ist es möglich, das Lager vollständig aus der Kupferlegierung herzustellen. Diese Alternativverfahren erlauben die Herstellung eines Lagers aus der besonders vorteilhaften erfindungsgemäßen Kupferlegierung mit bereits bestehenden Produktionseinrichtungen, die optimal eingefahren und in ihren technischen Details bestens bekannt sind. Damit können Lager mit relativ kurzer Vorlauf- und Erprobungszeit und entsprechend kostenoptimiert realisiert werden.

### Kurzbeschreibung der Figuren

- Fig. 1: zeigt einen Vergleich von mittleren Gewichtsverlusten dreier Kupferlegierungen mit und ohne Zugabe von Hartstoffpartikeln in einer Verschleißprüfvorrichtung.
- Fig. 2: zeigt einen Vergleich von mittleren Reibungskoeffizienten eines Gleitelements mit einer Kupferlegierung mit und ohne Zugabe von Festschmierstoffen in Abhängigkeit der Prüfdauer.

### Wege zur Ausführung der Erfindung

Um die Gleit- und Ermüdungseigenschaften von Kupferlegierungen mit Hartpartikeln bzw. Festschmierstoffen zu testen, wurden verschiedene tribologische Untersuchungen durchgeführt.

In Fig. 1 ist gezeigt, wie durch die Zugabe von Hartpartikeln, z.B. Oxiden, die Verschleißbeständigkeit von Cu-Legierungen nachweislich verbessert wird, wie im Vergleich des linken Balkens mit dem mittleren Balken deutlich wird. Ferner können synergistische Effekte erzielt werden, wenn zudem die Legierungsmatrix variiert wird. Durch Erhöhung der Festigkeit der Legierung und gleichzeitiger Zugabe von Hartpartikeln, weisen Gleitelemente eine weiter gesteigerte Ermüdungsfestigkeit und Abriebbeständigkeit auf, wie im Vergleich des mittleren Balkens mit dem rechten Balken ersichtlich wird.

In Fig. 2 ist dargestellt, dass das Einbringen von Festschmierstoffen, wie z.B. h-BN, die Reibung von Gleitelementen verringert und die Gleiteigenschaften deutlich verbessert werden. Der bei hohen Reibungskoeffizienten befindliche obere Graph stellt eine Standardkupferlegierung dar. Die Zugabe von h-BN bewirkt eine Verschiebung hin zu deutlich niedrigeren mittleren Reibungskoeffizienten, wie durch den unteren Graphen illustriert ist und die Wirksamkeit der Festschmierstoffe eindrucksvoll belegt.

## Patentansprüche

1. Kupferlegierung mit Hartpartikeln und optional Festschmierstoffen, wobei die Kupferlegierung eine Legierung vom Typ: CuNi6Sn5Fe2P0,15 ist, die 5,5 bis 6,4 % Ni, 4,5 bis 5,4 % Sn, 1,5 bis 2,4 % Fe, 0,145 bis 0,154 % P und als Rest Cu und nicht zu vermeidende Verunreinigungen aufweist oder eine Kupferlegierung vom Typ CuSn5Ni4Fe2P0,15 ist, die 4,5 bis 5,4% Sn, 3,5 bis 4,4 % Ni, 1,5 bis 2,4 % Fe, 0,145 bis 0,154 % P und als Rest Cu und nicht zu vermeidende Verunreinigungen aufweist, ist.

2. Kupferlegierung nach Anspruch 1, bei der die Hartpartikel Oxide, Karbide und/oder Nitride aufweisen.

3. Kupferlegierung nach einem der vorangegangenen Ansprüche, bei der die Hartpartikel Partikelgrößen kleiner als 15 µm aufweisen.

4. Kupferlegierung nach Anspruch 1, die bis zu 10 Gew.-% Hartpartikel und/oder bis zu 10 Ges.-% Festschmierstoffe aufweist.

5. Kupferlegierung nach einem der vorangegangenen Ansprüche, bei der die Festschmierstoffe hexagonales Bornitrid (h-BN) und/oder Graphit aufweisen.

6. Kupferlegierung nach einem der vorangegangenen Ansprüche, wobei die Kupferlegierung bleifrei ist.

7. Verwendung einer Kupferlegierung gemäß einem der Ansprüche 1-6 für ein Lager.

8. Lager mit einer Kupferlegierung gemäß einem der Ansprüche 1-6.

9. Verfahren zur Herstellung eines Lagers mit einer Kupferlegierung gemäß einem der Ansprüche 1-6 umfassend:
- Erzeugen eines metallischen Pulvers,
- optional Zumischen von Hartpartikeln und optionalen Festschmierstoffen in das metallische Pulver,
- optional Erzeugen intrinsischer Hartpartikel in der Kupferlegierung,
- optional, zwischen einem ersten Sinterschritt und einem zweiten Sinterschritt, einen Infiltrationsprozess zumindest eines Legierungselements, bevorzugt Aluminium.
- Sintern des Pulvers auf ein Substrat.

10. Verfahren zur Herstellung eines Lagers nach Anspruch 9, bei dem die Erzeugung des metallischen Pulvers durch Schmelzverdüsung erfolgt.

11. Verfahren zur Herstellung eines Lagers nach Anspruch 10, bei dem die Legierungselemente teils erst nach der Schmelzverdüsung zugegeben werden.

12. Verfahren zur Herstellung eines Lagers nach einem der vorangegangenen Ansprüche 10 bis 11, bei dem das Substrat ein Metallband, zum Beispiel ein Stahlband ist.

13. Verfahren zur Herstellung eines Lagers mit einer Kupferlegierung gemäß einem der Ansprüche 1 bis 6, bei dem die Kupferlegierung durch Gießen oder Plattieren auf ein Grundmaterial aufgebracht wird oder bei dem die Kupferlegierung gegossen, optional geglüht und gewalzt wird und das Lager vollständig aus der so hergestellten Kupferlegierung gefertigt wird.

## Claims

1. A copper alloy comprising hard particles and optionally solid lubricants, the copper alloy being an alloy of the type: CuNi6Sn5Fe2P0,15, comprising 5.5 to 6.4% of Ni, 4.5 to 5.4% of Sn, 1.5 to 2.4% of Fe, 0.145 to 0.154% of P and as balance (Cu) and inevitable impurities, or a copper alloy of the type CuSn5Ni4Fe2P0,15, comprising 4.5 to 5.4% of Sn, 3.5 to 4.4% ofNi, 1.5 to 2.4% of Fe, 0.145 to 0.154% of P and as balance Cu and inevitable impurities.

2. The copper alloy according to Claim 1, in which the hard particles comprise oxides, carbides and/or nitrides.

3. The copper alloy according to one of the preceding claims, in which the hard particles have particle sizes of less than 15 µm.

4. The copper alloy according to Claim 1, which comprises up to 10% by weight of hard particles and/or up to 10% by weight of solid lubricants.

5. The copper alloy according to one of the preceding claims, in which the solid lubricants comprise hexagonal boron nitride (h-BN) and/or graphite.

6. The copper alloy according to one of the preceding claims, the copper alloy being lead-free.

7. Use of a copper alloy according to one of Claims 1 to 6 for a bearing.

8. A bearing comprising a copper alloy according to one of Claims 1 to 6.

9. A method for producing a bearing comprising a copper alloy according to one of Claims 1 to 6, which comprises:
- producing a metallic powder,
- optionally admixing hard particles and optional solid lubricants to the metallic powder,
- optionally producing intrinsic hard particles in the copper alloy,
- optionally, between a first sintering step and a second sintering step, an infiltration process of at least one alloy element, preferably aluminum,
- sintering the powder onto a substrate.

10. The method for producing a bearing according to Claim 9, in which the production of the metallic powder is carried out by melt atomization.

11. The method for producing a bearing according to Claim 10, in which the alloy elements are in part only added after the melt atomization.

12. The method for producing a bearing according to one of the preceding Claims 10 to 11, in which the substrate is a metal strip, e.g. a steel strip.

13. The method for producing a bearing comprising a copper alloy according to one of Claims 1 to 6, in which the copper alloy is applied onto a basic material by casting or plating or in which the copper alloy is casted, optionally annealed and rolled, and the bearing is made completely of the thus produced copper alloy.

## Revendications

1. Alliage de cuivre comportant des particules dures et éventuellement des lubrifiants solides, dans lequel l'alliage de cuivre est un alliage du type : CuNi6Sn5Fe2P0,15 qui présente 5,5 à 6,4 % de Ni, 4,5 à 5,4 % de Sn, 1,5 à 2,4 % de Fe, 0,145 à 0,154% de P et pour le reste, du Cu et des impuretés inévitables ou est un alliage de cuivre du type CuSn5Ni4Fe2P0,15 qui présente 4,5 à 5,4 % de Sn, 3,5 à 4,4 % de Ni, 1,5 à 2,4 % de Fe, 0,145 à 0,154 % de P et pour le reste, du Cu et des impuretés inévitables.

2. Alliage de cuivre selon la revendication 1, dans lequel les particules dures présentent des oxydes, des carbures et/ou des nitrures.

3. Alliage de cuivre selon l'une des revendications précédentes, dans lequel les particules dures présentent des tailles de particule inférieures à 15 µm.

4. Alliage de cuivre selon la revendication 1, qui présente jusqu'à 10 % en poids de particules dures et/ou jusqu'à 10 % en poids de lubrifiants solides.

5. Alliage de cuivre selon l'une des revendications précédentes, dans lequel les lubrifiants solides présentent du nitrure de bore hexagonal (h-BN) et/ou du graphite.

6. Alliage de cuivre selon l'une des revendications précédentes, dans lequel l'alliage de cuivre est sans plomb.

7. Utilisation d'un alliage de cuivre selon l'une des revendications 1 à 6 pour un palier.

8. Palier comportant un alliage de cuivre selon l'une des revendications 1 à 6.

9. Procédé pour la fabrication d'un palier comportant un alliage de cuivre selon l'une des revendications 1 à 6 comprenant :
- la production d'une poudre métallique,
- éventuellement le mélange de particules dures et de lubrifiants solides éventuels dans la poudre métallique,
- éventuellement la production de particules dures intrinsèques dans l'alliage de cuivre,
- éventuellement, entre une première étape de frittage et une deuxième étape de frittage, un processus d'infiltration d'au moins un élément d'alliage, de préférence de l'aluminium,
- le frittage de la poudre sur un substrat.

10. Procédé pour la fabrication d'un palier selon la revendication 9, dans lequel la production de la poudre métallique s'effectue par pulvérisation en fusion.

11. Procédé pour la fabrication d'un palier selon la revendication 10, dans lequel les éléments d'alliage sont ajoutés en partie seulement après la pulvérisation en fusion.

12. Procédé pour la fabrication d'un palier selon l'une des revendications 10 à 11 précédentes, dans lequel le substrat est une bande de métal, par exemple, une bande d'acier.

13. Procédé pour la fabrication d'un palier comportant un alliage de cuivre selon l'une des revendications 1 à 6, dans lequel l'alliage de cuivre est appliqué par coulage ou placage sur un matériau de base ou dans lequel l'alliage de cuivre est coulé, éventuellement, est recuit et laminé et le palier est réalisé complètement à partir de l'alliage de cuivre ainsi produit.
